# EUROPEAN PATENT APPLICATION

(11) **EP 4 102 620 A1**
(43) Date of publication of application: **14.12.2022**
(21) Application number: 22172157.4
(22) Date of filing: 06.05.2022
(51) Int. Cl.: H01M 10/647, H01M 50/204, H01M 50/209, H01M 50/271, H01M 50/273

(54) **ENERGY STORAGE SYSTEM**

(30) Priority: 27.05.2021 KR 20210068475
(71) Applicant: SK On Co., Ltd., Seoul 03188 (KR)
(72) Inventor: SEOK, Jong Ho, 34124 Daejeon (KR); KIM, Suk Chul, 34124 Daejeon (KR); KIM, Yong Uk, 34124 Daejeon (KR); KIM, Yun Hee, 34124 Daejeon (KR); PARK, Byung Jun, 34124 Daejeon (KR); CHANG, Tae Hyun, 34124 Daejeon (KR); HAN, Dong Hwa, 34124 Daejeon (KR)
(74) Representative: Stolmár & Partner Patentanwälte PartG mbB

(57) **Abstract**

An energy storage system includes: stacked battery modules; and a rack accommodating the battery modules. The rack includes a sidewall disposed on one side of the battery modules, and the sidewall includes a fireproof unit opposing the battery modules.

## Description

### CROSS-REFERENCE TO RELATED APPLICATION(S)

This application claims the benefit under 35 USC 119 (a) of Korean Patent Application No. 10-2021-0068475 filed on May 27, 2021 in the Korean Intellectual Property Office, the entire disclosure of which is incorporated herein by reference for all purposes.

### BACKGROUND

### 1. Field

The present disclosure relates to a technology for an energy storage system, and more particularly, to a technology for a method of improving stability of an energy storage system.

### 2. Description of the Background

Recently, as interest in energy is increasing due to severe global climate change, smart grid and renewable energy technologies are in the spotlight. However, renewable energy has the disadvantage that the energy supply is not constant, so that there is a need for technology to compensate for such a disadvantage. An energy storage system is used to compensate for disadvantages of renewable energy and to establish a smart grid more efficiently.

An energy storage system (ESS) is a type of system in which the overall energy use efficiency is improved by storing generated power in a storage system and supplying the stored power when power is required. As the use and promotion of energy storage systems increase, accidents related to fire and explosions are also increasing. Fire or explosions in an energy storage system are not a simple accident but a safety accident which may inflict damage on human life, so that prevention and management are required.

As such ESS accidents and consequent risks are emerging, various efforts are being made to establish ESS safety-related standards, safety regulations, and the like, applicable to design, manufacture, supply, operation and maintenance of the ESS.

In particular, recently, fire accidents frequently occur in energy storage systems to which lithium-ion batteries are applied. Therefore, fire safety is strictly required. Due to characteristics of an energy storage system accommodating a plurality of battery modules, when a fire occurs in a single battery module, the fire may propagate to an adjacent battery module and may spread to even the entire system.

In this regard, North American standard UL 9540A recently issued an evaluation report on fire propagation to induce installation of only energy storage systems without fire propagation. According to the UL 9540A standard, flame in a module unit is permitted to be exposed outwardly, whereas flame in the entire system unit is forbidden to be exposed outwardly. In addition, a temperature outside the system should not exceed a maximum temperature of 97 degrees Celsius. To comply with the requirements of UL 9540A, for example, an energy storage system manufacturer should attach a hot pad to a unit battery module to prevent fire propagation between battery modules and flame exposure to the outside of the energy storage system.

### SUMMARY

An aspect of the present disclosure is to improve fire safety of an energy storage system accommodating a plurality of unit battery modules. In particular, an aspect of the present disclosure is to prevent chain ignition by preventing a fire from transferring to another unit battery module when a specific unit battery module ignites.

According to an aspect of the present disclosure, an energy storage system includes: stacked battery modules; and a rack accommodating the battery modules. The rack includes a sidewall disposed on one side of the battery modules, and the sidewall includes a fireproof unit opposing the battery modules.

The fireproof unit may include a fire-resistant member opposing the battery modules.

The fire-resistant member may include a thermosetting polymer member, a gypsum board, or a super-absorbent polymer.

The fire-resistant member may have a thickness of 20 mm or more.

The sidewall may further include a first frame, and the fire-resistant member may be fixedly coupled to the first frame.

The sidewall may further include a second frame extending in a direction, perpendicular to the first frame, and the battery modules may be loaded in the second frame.

Fire-resistant paint may be applied to at least a portion of an external surface of the sidewall.

The sidewall may further include a double-walled structure surrounding a portion or an entirety of the battery modules, and the double-walled structure may include an air layer therein.

The double-walled structure may include a pair of opposing plates spaced apart from each other with the air layer interposed therebetween.

Fire-resistant paint may be applied to at least a portion of an external surface of the double-walled structure.

A gap between the plates may be 10 mm or more.

A portion or an entirety of the battery modules may have a vent hole opposing the sidewall.

According to an aspect of the present disclosure, an energy storage system includes: stacked battery modules; and a rack accommodating the battery modules. The rack includes a sidewall disposed on one side of the battery modules. The sidewall includes a double-walled structure surrounding a portion or an entirety of the battery modules, and the double-walled structure includes an air layer therein.

The double-walled structure may include a pair of opposing plates spaced apart from each other with the air layer interposed therebetween.

Fire-resistant paint may be applied to at least a portion of an external surface of the double-walled structure.

### BRIEF DESCRIPTION OF DRAWINGS

FIG. 1 is a diagram illustrating an energy storage system according to an example embodiment.
FIG. 2 is a schematic perspective view of an energy storage system according to an example embodiment.
FIG. 3 is a diagram illustrating a sidewall of a rack in an example embodiment.
FIG. 4 is a cross-sectional view taken along line I-I' of FIG. 2.
FIG. 5 is a diagram illustrating a battery module disposed between sidewalls in an example embodiment.
FIG. 6 is a diagram illustrating that fire-resistant paint is applied to a surface of a sidewall in an example embodiment.
FIG. 7 is a diagram illustrating a sidewall including double walls.
FIG. 8 is a diagram illustrating a sidewall including double walls and a fire-resistant board.

### DETAILED DESCRIPTION

First of all, the terms used in the present specification and the claims are general terms selected in consideration of the functions of the various embodiments of the present disclosure. However, these terms may vary depending on intention, legal or technical interpretation, emergence of new technologies, and the like of those skilled in the related art. Further, some of the terms may be ones arbitrarily selected by the applicant. Unless there is a specific definition of a term, the term may be construed based on the overall contents and technological common sense of those skilled in the related art.

Further, like reference numerals indicate like components that perform substantially the same functions throughout the specification. For the sake of explanation and understanding, different embodiments are described with reference to like reference numerals. That is, even if all the components in the plurality of drawings have like reference numerals, it does not mean that the plurality of drawings refers to only one embodiment.

Further, the terms including numerical expressions such as a first, a second, and the like may be used to explain various components, but there is no limitation thereto. These terms are used only for the purpose of differentiating one component from another, without limitation thereto. For example, a numerical expression combined with a component should not limit the order of use or order of arrangement of the component. When necessary, the numerical expressions may be exchanged between components.

The singular expression also includes the plural meaning as long as it does not differently mean in the context. In this specification, terms such as "include," "comprise," and "have/has" should be construed as designating that there are such characteristics, numbers, operations, elements, components or a combination thereof in the specification, not to exclude the existence or possibility of adding one or more of other characteristics, numbers, operations, elements, components or a combination thereof.

The features of the examples described herein may be combined in various ways as will be apparent after an understanding of the disclosure of this application. Further, although the examples described herein have a variety of configurations, other configurations are possible as will be apparent after an understanding of the disclosure of this application.

Hereinafter, example embodiments of the present disclosure will be described in detail with reference to the accompanying drawings.

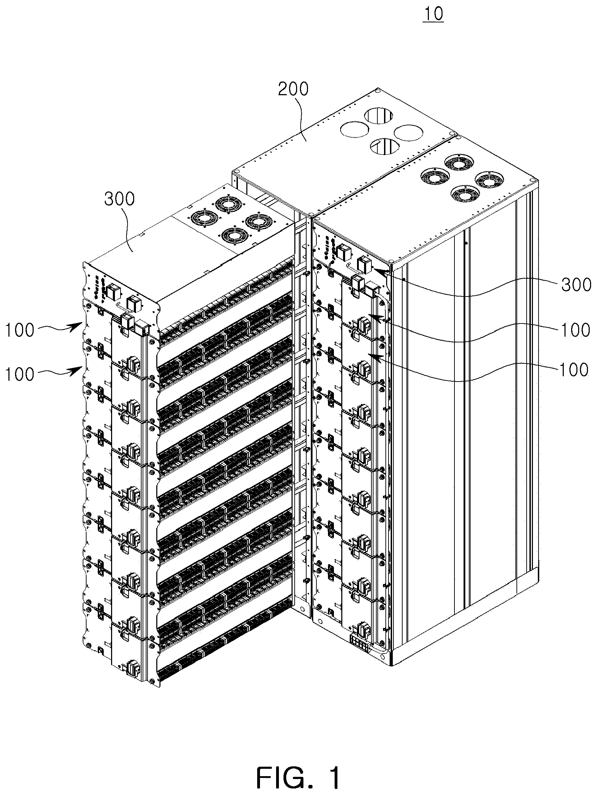

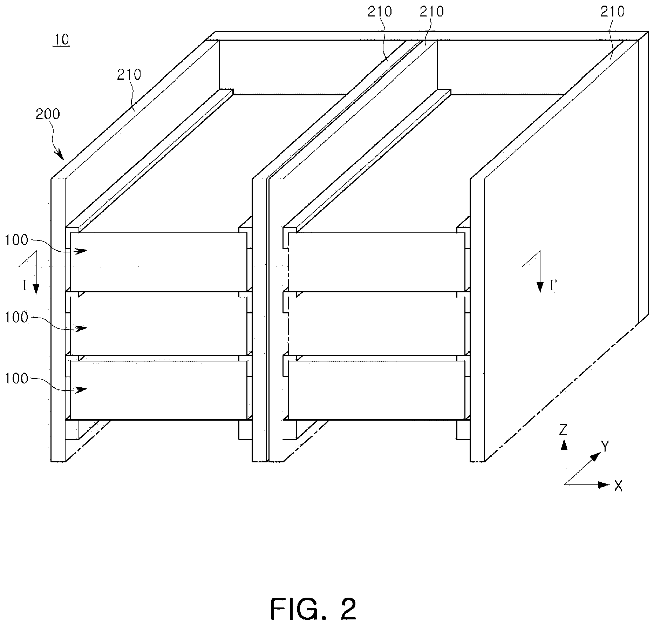

FIG. 1 is a diagram illustrating an energy storage system 10 according to an example embodiment, and FIG. 2 is a schematic perspective view of the energy storage system 10 according to an example embodiment.

Referring to FIGS. 1 and 2, the energy storage system 10 may include a plurality of battery modules 100 and a rack 200 accommodating the plurality of battery modules 100.

In an example embodiment, the energy storage system 10 may include various devices for safety. For example, the energy storage system 10 may include a battery protection unit (BPU) 300 for monitoring voltage and current performances, switching charging and discharging modes, blocking overcurrent, and the like. In addition, the energy storage system 100 may include a fan for cooling the battery module 100, a fire extinguishing device for suppressing a fire occurring in the battery module 100, and the like.

For example, the rack 200 may include a sidewall 210 covering the left, right, and rear of the battery module 100 arranged in a height direction. Although not illustrated, the side wall 210 may also be disposed in front of the battery module 100 such that the side wall 210 may be provided in the form of covering the battery module 100.

In an example embodiment, the battery modules 100 may be stacked inside the rack 200. For example, the battery modules 100 may be stacked in one direction at predetermined intervals. In the example embodiment illustrated, the battery modules 100 are arranged in two rows. However, this is only an example and example embodiments are not limited thereto. In another embodiment, the battery module 100 may be arranged in a single row or three or more rows, and the rack 200 may include a structure corresponding to each row. For example, referring to FIG. 2, the sidewall 210 may be configured to surround each of a battery module disposed left and a battery module disposed right.

In an example embodiment, the battery module 100 may include one or more battery cells. The battery cell may be a secondary battery, and may be at least one of a pouch-type secondary battery, a cylindrical secondary battery, and a rectangular secondary battery.

When an event such as thermal runaway occurs in some of the battery modules 100 accommodated in the rack 200, flames or gases ejected from a corresponding battery module may reach neighboring battery modules. This may result in chain ignition. According to an embodiment, the energy storage system 10 may provide a means for suppressing or significantly reducing propagation of flame or heat through the rack 200.

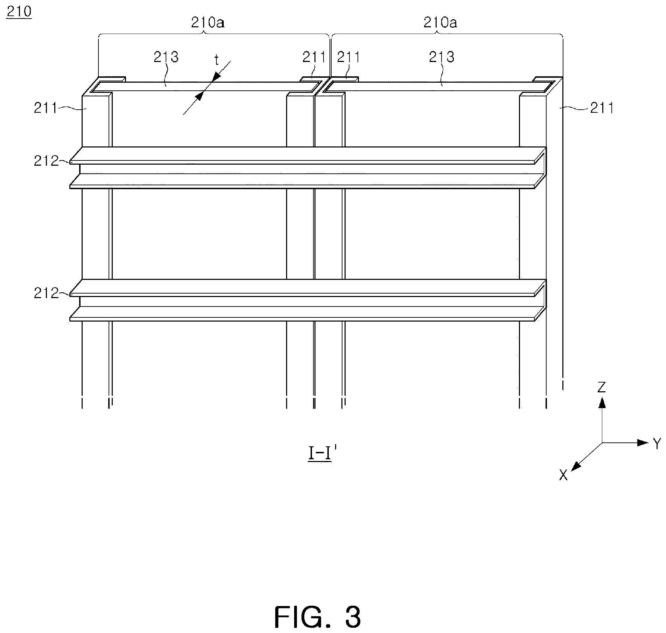

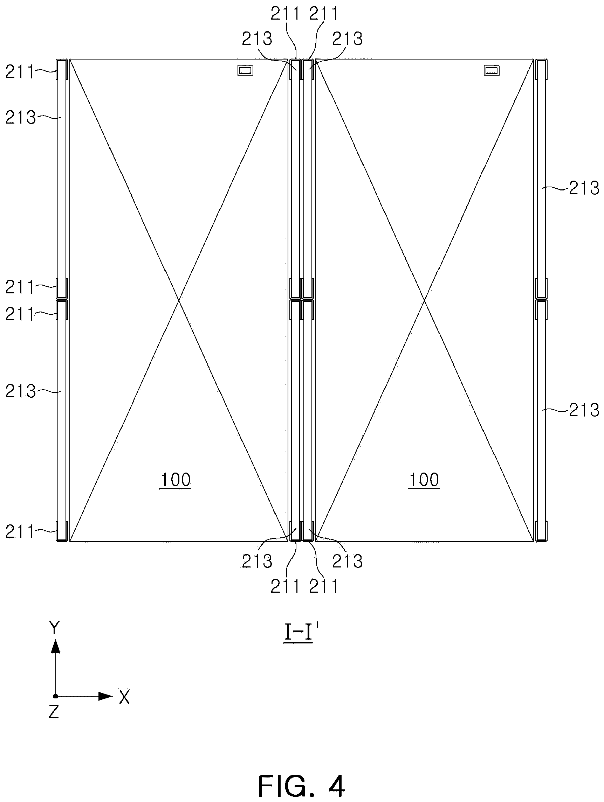

FIG. 3 is a diagram illustrating a sidewall 210 of a rack 200 in an example embodiment, and FIG. 4 is a cross-sectional view taken along line I-I' of FIG. 2.

Referring to FIGS. 3 and 4, the rack 200 may include a sidewall 210 standing on one side of the battery module 100, and the battery module 100 may be disposed between the sidewalls 210.

In an example embodiment, the sidewall 210 may include a fireproof unit. For Example, the fireproof unit may include a fire-resistant member 213 disposed on one side of the battery module 100. The fire-resistant member 213 may be provided in the form of a plate opposing the battery module 100 in an X-direction. Referring to FIG. 4, the fire-resistant member 213 may be disposed at a predetermined distance from the battery module 100 in the X-direction. However, a portion of the battery module 100 may be in contact with the fire-resistant member 213.

In an example embodiment, the sidewall 210 may include a first frame 211 extending in a direction in which the battery module 100 is disposed, and the fire-resistant member 213 may be coupled to a first frame 211. In an example embodiment, the fire-resistant member 213 may be provided in the form of a plate having a thickness "t" of 20 mm or more.

In an example embodiment, the first frame 211 may have a shape surrounding one side edge of the fire-resistant member 213. For example, the first frame 211 is provided in the form of a C-shaped beam, and the one side edge of the fire-resistant member 213 may be fitted to the beam.

In an example embodiment, the first frame 211 maybe provided as a pair of frames for a single fire-resistant member 213. For example, two first frames, 211 standing side by side in the height direction, may be fitted to opposite sides of the fire-resistant member 213.

In an example embodiment, the sidewall 210 may include a plurality of unit sidewalls 210a. The unit sidewall 210a may include a fire-resistant member 213 and a pair of first frames 211 disposed on opposite sides of the fire-resistant member 213. Referring to FIG. 3, two unit sidewalls 210a may stand adjacent to each other in a length direction of the battery module 100 to constitute a single sidewall 210. In another embodiment, the sidewall 210 may include three or more unit sidewalls 210a. The unit sidewalls 210a may be coupled by welding, or may be coupled to each other by a second frame 212 intersecting the unit sidewalls 210a.

In an example embodiment, the fire-resistant member 213 may include a gypsum board. The gypsum board may be a plate material having a surface coated with base paper by mixing water and a mixture material using plaster (CaSO₄ ·½H₂O) as a main raw material. In this case, the plaster may be obtained from water of crystallization, partially dehydrated by calcining dihydrate gypsum (CaSO₄ ·2H₂O) at about 130°C to about 160°C.

In an example embodiment, the fire-resistant member 213 may include a fireproof gypsum board. The fireproof gypsum board may be a gypsum board having improved fire-resistant performance by reinforcing gypsum having incombustible characteristics with fire-resistant materials and inorganic fibers. In an example embodiment, the fire-resistant member 213 may include a fireproof and waterproof gypsum board. The fireproof and waterproof gypsum board is a multifunctional gypsum board having both a fireproof function and a waterproof function.

Gypsum contains about 20% of water of crystallization, serving to prevent initial fire and to delay combustion. In particular, a fire-resistant gypsum board may be reinforced with an inorganic fiber to exhibit excellent fire-resistance performance, and thus, may be appropriate as a fire-resistant and fireproof structure.

When a gypsum board is applied, flame discharge to the outside of the rack 200 may be prevented or significantly reduced in spite of ejection of flame from the battery module 100. The flame ejection to the outside of the rack 200 may be prevented to prevent fire from propagating to other battery modules. According to an actual experimental result, when a fire occurred in the battery module, a maximum temperature of the sidewall 210, to which a gypsum board was applied, was about 74 degrees Celsius and a maximum temperature of the sidewall 210, to which the gypsum board was not applied, was about 561 degrees Celsius. For example, the gypsum board may prevent a temperature of the sidewall 210 from excessively increasing even in a fire situation to prevent or significantly reduce fire propagation to other battery modules.

In an example embodiment, the fire-resistant member 213 may include a thermosetting polymer member or a curable polymer member. The thermosetting polymer may include, for example, a bulk molding compound (BMC) including unsaturated polyester and glass fiber.

In an example embodiment, the fire-resistant member 213 may include a super-absorbent polymer (SAP). The super-absorbent polymer is a material, capable of absorbing water hundreds of times its own weight. In an example embodiment, the fire-resistant member 213 may contain a solution including a super-absorbent polymer. When the super-absorbent polymer and water are mixed, a large number of fine water particles surrounded by the polymer may be generated. Due to the polymer surrounding the water particles, a larger amount of heat is required to increase a temperature of the water particles, and heat transfer between the water particles may be delayed. For example, the fire-resistant member containing a super-absorbent polymer solution may have a significantly high heat absorption rate, and may have high fire resistance and high heat resistance in a fire situation.

The rack 200 may include a structure configured to load the battery module 100. In an example embodiment, the rack 200 may include a second frame 212 extending in a length direction of the battery module 100. The second frame 212 may be attached to an internal side of the sidewall 210 to load the battery module 100 in the rack 200. For example, referring to FIG. 3, the second frame 212 may be attached to the first frame 211. The second frame 212 may be attached to the first frame 211 to improve the rigidity of the sidewall 210.

The second frame 212 may be provided with a plurality of second frames attached to the internal side of the sidewall 210 such that the plurality of battery modules 100 are arranged at intervals in a height direction.

Referring to FIG. 3, the second frame 212 is provided as a beam having a c-shaped cross-section, but this is only an example. In another embodiment, the second frame 212 may have a cross-section having another shape. In the present disclosure, the second frame 212 may be configured to provide a structure in which the battery module 100 may be loaded. For example, the second frame 212 may be provided as a beam having a reverse L-shaped cross-section.

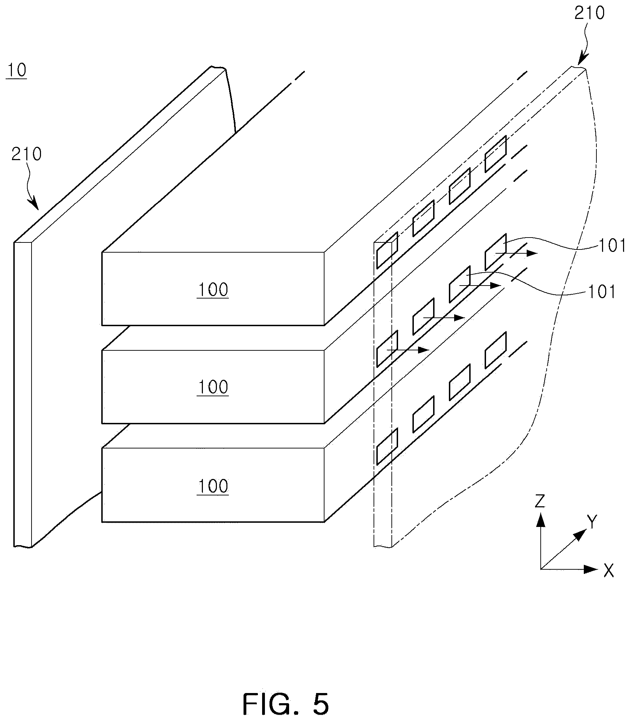

FIG. 5 is a diagram illustrating the battery module 100 disposed between the sidewalls 210 in an example embodiment. In FIG. 5, the sidewall 210 and the battery module 100 are schematically illustrated for ease of description. For example, the second frame 212 loading the battery module 100 on an internal side of the sidewall 210 is omitted.

Referring to FIG. 5, the battery module 100 may have a vent hole 101 through which flame or gas generated therein may be discharged. The vent hole 101 may be provided with a plurality of vent holes 101. For example, the battery module 100 may include stacked sub-battery modules, and each of the sub-battery modules 100 may have a vent hole 101. As another example, the battery module 100 may include an external casing, accommodating electrode assemblies therein, and the external casing may have a plurality of vent holes 101 communicating with the inside of the battery module 100.

In an example embodiment, the battery module 100 may have a vent hole 101 opposing a sidewall 210. In an example embodiment, a fire-resistant member 213 may be disposed to oppose the vent hole 101. For example, the vent hole 101 may be open in an X-direction to discharge gas and flame inside the battery module 100 in the X-direction, and the fire-resistant member 213 may be disposed to oppose the battery module 100 in the X-direction.

According to an example embodiment, even when a flame or gas is ejected from the vent hole 101 to the fire-resistant member 213, fire may be prevented from propagating to a neighboring battery module 100. Since the fire-resistant member 213 is significantly resistant to flame or high-temperature gas, fire may be prevented or suppressed from spreading to the neighboring battery module 100.

For example, when the fire-resistant member 213 includes a gypsum board, the gypsum board may not be damaged in spite of ejection of high-temperature gas from a portion of the gypsum board, and the other portion may be maintained at relatively low temperature. This may prevent an ignited battery module 100 and a neighboring battery module 100 from being ignited sequentially.

In the example embodiment illustrated, the fire-resistant member 213 may be provided in the form of a plate, but this is only an example. In other embodiments, the fire-resistant member 213 may be provided to have various shapes. For example, the fire-resistant member 213 may be provided to fill a periphery of the battery module 100. For example, the rack 200 may include an external plate surrounding the periphery of the battery module 100, and a gypsum board or a thermosetting polymer member may tightly fill a space between the externa plate and the battery module 100.

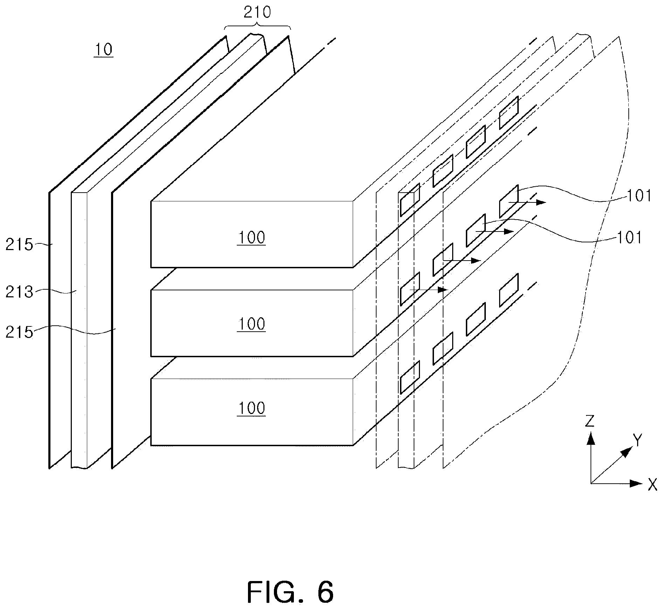

FIG. 6 is a diagram illustrating that fire resistant paint 215 is applied to a surface of a sidewall 210 in an example embodiment.

Referring to FIG. 6, in an example embodiment, the sidewall 210 may further include a layer constituting an external surface and including a fire-resistant paint 215. For example, a fire-resistant paint 215 may be applied to the external surface of the sidewall 210. The fire-resistant paint 215 may reduce an effect caused by heat of flame or gas discharged to the battery module 100 by the fire-resistant member 213.

In the example embodiment illustrated, the fire-resistant paint 215 may be applied to opposite sides of the fire-resistant member 213, but this is only an example. In another embodiment, the fire-resistant paint 215 may be applied to only a surface, facing the battery module 100, in the fire-resistant member 213.

When the fire-resistant paint 215 is applied to the fire-resistant member 213, the fire-resistant member 213 may be provided to have a relatively small thickness "t." For example, a gypsum board (or a thermosetting polymer member) having no fire-resistant paint 215 may be provided to have a thickness of 20 mm or more, but the thickness of the gypsum board having a surface, to which the fire-resistant paint 215 applied, may be decreased to a level of 10 mm.

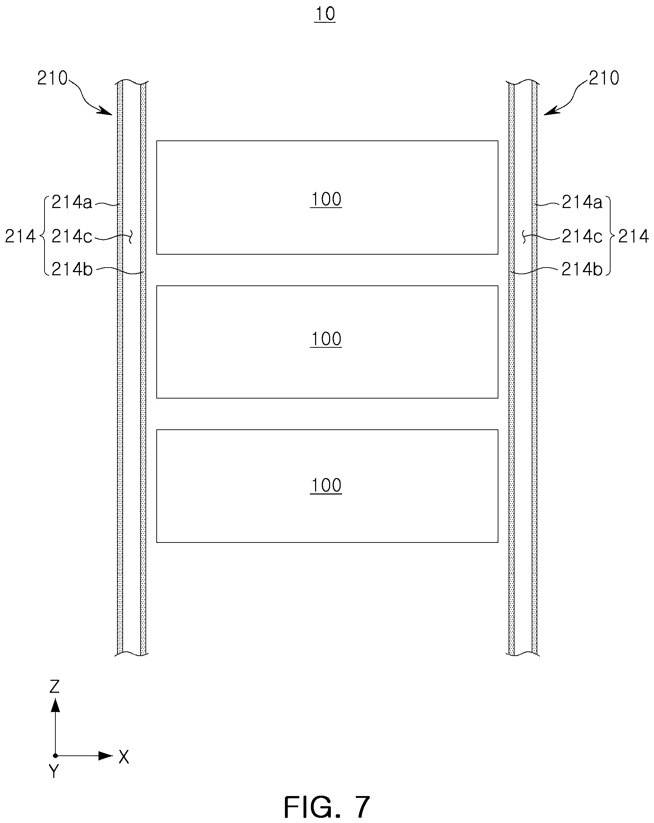

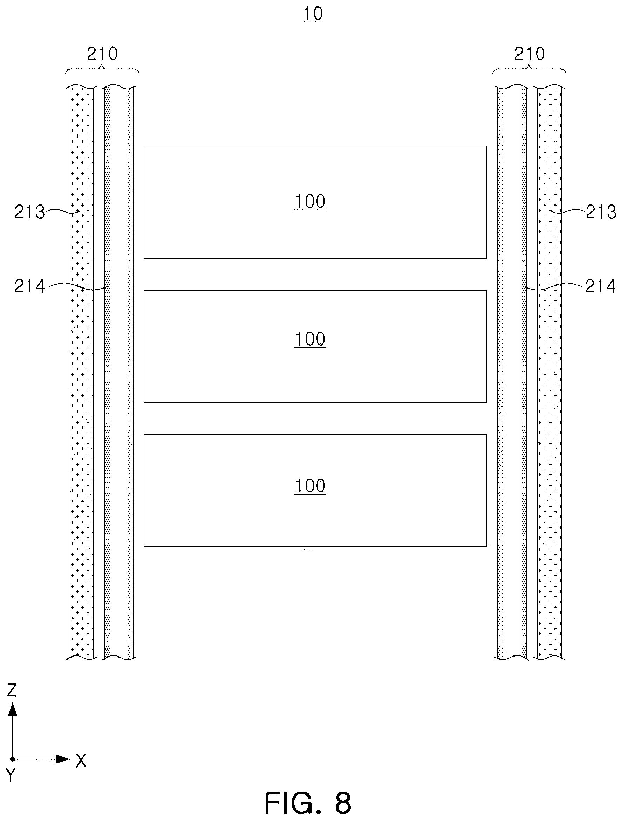

FIG. 7 is a diagram illustrating a sidewall 210 including double walls, and FIG. 8 is a diagram illustrating a sidewall 210 including double walls and a fire-resistant board.

In an example embodiment, the fireproof unit of the sidewall 210 may include a double-walled structure 214. In an example embodiment, the double-walled structure 214 may include an air layer 214c therein. For example, the sidewall 210 may include two plates 214a and 214b spaced apart from each other, and the air layer 214c may be formed between the two plates 214a and 214b. In another embodiment, an insulator other than air may be disposed between the two plates 214a and 214b.

In an example embodiment, the double-walled structure 214 may be provided in the form of surrounding a portion or an entirety of a side surface of the battery module 100. For example, when the battery module 100 is disposed in a height direction, the double-walled structure 214 may be provided in the form of surrounding the rear and side of the battery module 100 in a C-shape. The double-walled structure 214 may prevent glow discharge from occurring during fire, and may prevent chain ignition.

In an example embodiment, the fire-resistant paint 215 may be applied to an external surface of the double-walled structure 214. For example, the fire-resistant paint 215 may be applied to a surface of an internal plate 214b opposing the battery module 100.

In an example embodiment, a distance between the two plates 214a and 214b constituting the double-walled structure 214 may be 10mm or more.

In an example embodiment, the fireproof unit of the sidewall 210 may include both the fire-resistant member 213 and the double-walled structure 214. For example, the fire-resistant member 213 may be disposed on one side of the battery module 100, and the double-walled structure 214 may be disposed between the fire-resistant member 213 and the battery module 100.

When both the fire-resistant member 213 and the double-walled structure 214 are disposed on one side of the battery module 100, the fire-resistant member 213 may be provided to be relatively thin. For example, when only the fire-resistant member 213 is disposed on the side of the battery module 100, the fire-resistant member 213 may be provided to have a thickness of 20 mm or more. However, when the double-walled structure 214 is also disposed, a thickness "t" of the fire-resistant member 213 may be decreased to a level of 10 mm.

In FIGS. 6 to 8, a structure, in which the battery module 100 may be loaded, is omitted for ease of description. In an example embodiment, a frame (for example, the second frame 212 of FIG. 3), in which the battery module 100 is loaded, may be attached to an internal side of the sidewall 210.

As described above, the energy storage system according to an example embodiment has high safety against fire. According to an example embodiment, when the battery module is ignited, fire may be prevented from propagating to other battery modules.

While specific examples have been illustrated and described above, it will be apparent after gaining an understanding of this disclosure that various changes in form and details may be made in these examples without departing from the spirit and scope of the claims and their equivalents. The examples described herein are to be considered in a descriptive sense only, and are not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An energy storage system comprising:
stacked battery modules; and
a rack accommodating the battery modules,
wherein the rack includes a sidewall disposed on one side of the battery modules, and
the sidewall includes a fireproof unit opposing the battery modules.

2. The energy storage system of claim 1, wherein the fireproof unit includes a fire-resistant member opposing the battery modules.

3. The energy storage system of claim 2, wherein the fire-resistant member includes a thermosetting polymer member, a gypsum board, or a super-absorbent polymer.

4. The energy storage system of claim 3, wherein the fire-resistant member has a thickness of 20 mm or more.

5. The energy storage system of claim 2, wherein the sidewall further includes a first frame, and the fire-resistant member is fixedly coupled to the first frame.

6. The energy storage system of claim 5, wherein the sidewall further includes a second frame extending in a direction, perpendicular to the first frame, and the battery modules are loaded in the second frame.

7. The energy storage system of claim 2, wherein fire-resistant paint is applied to at least a portion of an external surface of the sidewall.

8. The energy storage system of claim 2, wherein the sidewall further includes a double-walled structure surrounding a portion or an entirety of the battery modules, and the double-walled structure includes an air layer therein.

9. The energy storage system of claim 8, wherein the double-walled structure includes a pair of opposing plates spaced apart from each other with the air layer interposed therebetween.

10. The energy storage system of claim 9, wherein fire-resistant paint is applied to at least a portion of an external surface of the double-walled structure.

11. The energy storage system of claim 9, wherein a gap between the plates is 10 mm or more.

12. The energy storage system of claim 2, wherein a portion or an entirety of the battery modules has a vent hole opposing the sidewall.

13. The energy storage system of claim 1, wherein the fireproof unit includes a double-walled structure surrounding a portion or an entirety of the battery modules, and the double-walled structure includes an air layer therein.

14. The energy storage system of claim 13, wherein the double-walled structure includes a pair of opposing plates spaced apart from each other with the air layer interposed therebetween.

15. The energy storage system of claim 14, wherein fire-resistant paint is applied to at least a portion of an external surface of the double-walled structure.
